# EUROPÄISCHE PATENTSCHRIFT

(11) **EP 2 493 062 B1**
(45) Veröffentlichungstag und Bekanntmachung des Hinweises auf die Patenterteilung: **15.04.2015**
(21) Anmeldenummer: 11185599.5
(22) Anmeldetag: 18.10.2011
(51) Int. Cl.: H02M 3/158

(54) **DC-DC Wandlerzelle, hieraus aufgebaute rückspeisefähige DC-DC Wandlerschaltung und Verfahren zu deren Betrieb**
DC-DC converter cell, regenerative DC-DC converter circuit comprising same and method for operating same
Cellule de convertisseur CC-CC, circuit convertisseur ayant une capacité de retour monté à partir de celle-ci et son procédé de fonctionnement

(30) Priorität: 28.02.2011 US 447399 P
(43) Veröffentlichungstag der Anmeldung: 29.08.2012
(73) Patentinhaber: SEMIKRON Elektronik GmbH & Co. KG, 90431 Nürnberg (DE)
(72) Erfinder: Haddad, Kevork, Newark Valley, NY 13811 (US)

(56) Entgegenhaltungen:
- DE-A1-102009 008 072
- US-A1- 2007 296 383
- US-A1- 2009 206 804

## Beschreibung

Die Erfindung beschreibt eine rückspeisefähige DC-DC- Wandlerschaltung zur Verbindung mit einer DC- Spannungsquelle und einer DC- Spannungssenke, wobei der bevorzugte Energietransport von der DC- Spannungsquelle zur DC- Spannungssenke führt, aber der Begriff "rückspeisefähig" auch den umgekehrten Weg beschreibt und somit die DC-DC- Wandlerschaltung auch Energie von der DC- Spannungssenke zur DC-Spannungsquelle transportieren kann. Zudem beschreibt die Erfindung ein vorteilhaftes Verfahren zum Betrieb einer derartigen rückspeisefähigen DC-DC- Wandlerschaltung.

Derartige DC-DC- Wandlerschaltungen, oder auch eine sie unter anderem bildendende DC-DC- Wandlerzellenanordnung oder auch eine diese bildende DC-DC-Wandlerzelle dienen in der Regel der Spannungsanpassung der Ausgangsspannung einer DC- Spannungsquelle mit einer, häufig zeitlich nicht konstanten, Ausgangsspannung an eine DC- Spannungssenke mit zeitlich konstantem in der Regel höherem Spannungswert.

DC- Spannungsquellen der hier beschriebenen Art können Photovoltaikanlagen oder Teilanlagen hiervon, Brennstoffzellen oder Speicherelemente wie Akkumulatoren oder Kondensatorschaltungen sein. Typisch für die verschiedenen Arten von DC-Spannungsquellen sind deren unterschiedliche Funktionsparameter. Während Photovoltaikanlagen im Wesentlichen dadurch gekennzeichnet sind, dass deren Ausgangsspannung hohen Schwankungen unterworfen sind, sind Brennstoffzellen durch eine verhältnismäßig Konstante Spannungsabgabe gekennzeichnet. Verschiedene Speicherelemente weisen eine meist konstante, naturgegeben allerdings zeitlich begrenzte Ausgangsspannung, hier besser als Anschlussspannungen bezeichnet, auf.

DC- Spannungssenken können der Eingang einer Wechselrichterschaltungsanordnung oder ein DC- Bussystem sein. Typisch für ein DC-Bussystem ist eine Mehrzahl hieran angeschlossener gleichartiger oder unterschiedlich ausgebildeter DC-DC- Wandlersysteme, mit hiermit verbundenen DC- Spannungsquellen, die das DC- Bussystem speisen oder aus diesem gespeist werden. Häufig ist es unter Berücksichtigung von Leitungsverlusten vorteilhaft den Spannungswert des DC-Bussystems wesentlich höher zu wählen als die Ausgangsspannung zumindest der meisten angeschlossenen DC- Spannungsquellen.

Aus der US 2007 / 0296383 A1 ist ein nicht isolierter Stromrichter mit einer Spannungsteilertopologie bekannt, wobei der Stromrichter vier in Serie geschaltete Halbleiterschalter, die paarweise und komplementär arbeiten, aufweist.

Die DC-DC-Wandlerzelle der US 2007 / 0296383 A1 besitzt zwei Eingangs- und zwei Ausgangsanschlüsse und eine Wandlerstufe, wobei der erste Eingangsanschluss mit dem Mittelpunkt der Wandlerstufe und der zweite Eingangsanschluss mit dem zweiten Ausgangsanschluss verbunden ist und wobei an den ersten und zweiten Eingangsanschluss eine Gleichspannungsquelle anschließbar ist und wobei die Wandlerstufe aus einer oberen und einer unteren Reihenschaltung von jeweils zwei Leistungsschaltern besteht und mit den beiden Ausgangsanschlüssen verbunden ist, wobei der Verbindungspunkt der zwei oberen Leistungsschalter und der Verbindungspunkt der zwei unteren Leistungsschalter über einen Kondensator verbunden sind.

Aus der DE 10 2009 008 072 A1 ist ein Hochsetzsteller zum Hochsetzen einer an einem Eingang anliegenden Eingangsgleichspannung in eine an einem Ausgang bereitzustellende höhere Ausgangsgleichspannung bekannt, wobei der Hochsetzsteller zumindest eine Steuereinheit, drei Ladespulen und ein 3-Phasen-Modul mit drei parallelgeschalteten Halbbrücken aufweist.

Aus der US 2009 / 0206804 A1 ist eine Spannungsregelkreisanordnung mit einem geregelten Zweig, der mindestens einen geregelten Stromrichter aufweist, und mit einem ungeregelten Zweig, der mindestens einen ungeregelten Stromrichter aufweist, bekannt.

Der Erfindung liegt die Aufgabe zugrunde eine universelle DC-DC-Wandlertopologie für die bidirektionale, also rückspeisefähige Verbindung einer DC-Spannungsquellen vorzugsweise variabler Anschlussspannung mit einer DC-Spannungssenke vorzugsweise konstanter Anschlussspannung vorzustellen.

Die Aufgabe wird erfindungsgemäß gelöst, durch eine DC-DC- Wandlerschaltung mit den Merkmalen des Anspruchs 6, mit mindestens einer Wandlerzelle gemäß Anspruch 1, sowie durch ein Verfahren gemäß Anspruch 10. Bevorzugte Ausführungsformen sind in den jeweiligen abhängigen Ansprüchen beschrieben.

Ausgangspunkt der Erfindung ist eine DC-DC- Wandlerzelle zur Umwandlung einer an den Eingangsanschlüssen anliegenden Gleichspannung mit einem ersten Spannungswert in eine dann an den Ausgangsanschlüssen anliegenden Gleichspannung mit einem zweiten Spannungswert. Eine derartige DC-DC- Wandlerzelle dient beispielhaft der Anpassung der Ausgangsspannung einer Photovoltaikanlage, oder eines Anlagenteils hiervon, mit zeitlich variierendem ersten Spannungswert an den Eingängen eines Wechselrichters mit einer Gleichspannung mit zweitem, konstanten Spannungswert. Vorteilhafterweise ist diese DC-DC- Wandlerzelle rückspeisefähig, also bidirektional funktionsfähig, um beispielhaft aus einem DC- Bussystem mit konstantem Spannungswert ein Speicherelement mit ebenfalls konstantem, aber geringeren Spannungswert zu laden. Selbstverständlich kann das DC- Bussystem ebenso wieder aus dem Speicherelement gespeist werden.

Die hier vorgeschlagene DC-DC- Wandlerzelle weist drei Eingangs- und zwei Ausgangsanschlüsse auf. An zwei der drei Eingangsanschlüsse ist die DC-Spannungsquelle derart anschließbar, dass sie mit dem ersten und zweiten oder mit dem zweiten und dritten Eingangsanschluss verbunden ist. Es kann beim Anschluss der DC-Spannungsquelle vorteilhaft sein einen der beiden Eingangsanschlüsse mit Grundpotential zu verbinden. Ebenso kann es vorteilhafte sein zwischen den beiden Eingangsanschlüssen, die mit der DC- Spannungsquelle verbunden sind, einen Eingangskondensator vorzusehen. Von den beiden Ausgangsanschlüssen ist der erste mit dem ersten Eingangsanschluss und der zweite mit dem dritten Eingangsanschluss der DC-DC- Wandlerzelle verbunden. Weiterhin sind die beiden Ausgangsanschlüsse mit einer DC- Spannungssenke verbindbar, wobei auch hier vorteilhafterweise ein Ausgangskondensator zwischen den beiden Ausgangsanschlüssen vorgesehen sein kann.

Weiterhin weist die DC-DC- Wandlerzelle mindestens eine, vorteilhafterweise aber eine Mehrzahl gleichartig ausgebildeter Wandlerstufen auf. Jeder Wandlerstufe weist eine ober und eine untere Reihenschaltung von jeweils mindestens drei Leistungsschaltern auf. Diese Leistungsschalter können dem bekannten Stand der Technik entsprechend jeweils als Leistungstransistoren, beispielhaft als IGBTs mit antiparallelen Freilaufdioden oder als MOS-FETs ausgebildet sein.

Der zweite Eingangsanschluss der DC-DC- Wandlerzelle ist mit dem Mittelpunkt jeder der mindestens einen Wandlerstufen, vorzugsweise mittels einer zwischengeschalteten Spule, verbunden. Der Mittelpunkt teilt die jeweilige Wandlerstufe in die obere und die untere Reihenschaltung symmetrisch auf. Den jeweiligen Transistoren der beiden Reihenschaltungen sind Ordnungszahlen von 1 bis N-1 zugewiesen, die jeweils vom Mittelpunkt aus gezählt werden. Der letzte der oberen Leistungsschalter, derjenige mit der Ordnungszahl N-1, ist mit dem ersten Eingangsanschluss verbunden, während der letzte der unteren Leistungsschalter, ebenfalls derjenige mit der Ordnungszahl N-1, mit dem dritten Eingangsanschluss verbunden ist.

Weiterhin sind in jeder der mindestens einen Wandlerstufen mindestens zwei Kondensatorn vorgesehen. Der jeweilige Kondensator weist ebenfalls eine Ordnungszahl auf. Der Kondensator einer Ordnungszahl ist einerseits mit dem Mittelpunkt zwischen dem oberen Leistungsschalters der gleichen Ordnungszahl und dem diesem in der Ordnungszahl nachfolgenden und andererseits mit dem Mittelpunkt zwischen dem unteren Leistungsschalters der gleichen Ordnungszahl und dem diesem in der Ordnungszahl nachfolgenden verbunden. Somit entsteht vom Mittelpunkt der jeweiligen Wandlerstufe aus betrachtet eine Symmetrische Anordnung von N-2 Kondensatoren.

Somit entstehen vom Mittelpunkt aus betrachtet in jeder Wandlerstufe N Potentiallevel, deren erstes der Mittelpunkt selbst und deren letztes der erste bzw. dritte Eingangsanschluss bildet, während die mittleren durch die Mittelpunkte zwischen den Leistungsschaltern gebildet werden. Eine Anordnung mit jeweils vier Leistungsschaltern in der oberen und unteren Reihenschaltung weist somit drei Kondensatoren und fünf Potential-Level auf und wird daher als Fünf-Level-Schaltung bezeichnet.

Vorteilhaft an dieser Ausgestaltung einer DC-DC- Wandlerzelle ist, dass jeder der N-1 Leistungsschalter in jeder Reihenschaltung nur eine Spannungsfestigkeit von 1/(N-1)-fachen der Ausgangsspannung der DC-DC- Wandlerzelle aufzuweisen braucht. Durch geeignete Ansteuerung der Leistungsschalter, insbesondere durch eine versetzte Taktung kann bei einer Aufwärtswandlung durch die DC-DC- Wandlerzelle die Welligkeit des Ausgangsstromes mit steigender Levelanzahl verringert werden und somit die Kapazität eines vorzusehenden Ausgangskondensators um den jeweiligen Faktor gesenkt werden.

Eine DC-DC- Wandlerzellenanordnung weist zwei der eben beschriebenen DC-DC- Wandlerzellen auf, wobei der dritte Eingangsanschluss der erste DC-DC-Wandlerzelle mit dem ersten Eingangsanschluss der zweiten DC-DC- Wandlerzelle sowie der zweite Ausgangsanschluss der erste DC-DC- Wandlerzelle mit dem ersten Ausgangsanschuss der zweiten DC-DC- Wandlerzelle verbunden sind bzw. sich die jeweiligen Anschlüsse entsprechen.

Die jeweiligen zweiten Eingangsanschlüsse der beiden DC-DC- Wandlerzellen bilden die Eingänge der Wandlerzellenanordnung aus. Vorteilhafterweise ist an mindestens einem Eingang der Wandlerzellenanordnung eine Spule vorgesehen, wie oben bei der DC-DC- Wandlerzelle beschrieben. Bei Vorsehen von jeweils einer Spule in beiden Eingänge der DC-DC- Wandlerzellenanordnung kann es weiterhin vorteilhaft sein diese beiden Spulen magnetisch, d.h. transformatorisch, zu koppeln.

Der erste Ausgangsanschluss der ersten DC- Wandlerzelle und der zweite Ausgangsanschluss der zweiten DC- Wandlerzelle bilden die beiden Ausgänge der DC-DC- Wandlerzellenanordnung. Es kann allerdings auch vorteilhaft sein die miteinander verbunden zweiten bzw. ersten Ausgangsanschlüsse der ersten bzw. zweiten DC-DC-Wandlerzelle als zusätzlichen Ausgang der DC-DC- Wandlerzellenanordnung vorzusehen. Dieser zusätzlich Ausgang kann beispielhaft zur Symmetrierung der Ausgangsspannung dienen und vorteilhafterweise dann auf Grundpotential liegen, wenn keiner der beiden Eingänge der DC-DC- Wandlerzellenanordnung auf Grundpotential liegt.

Für die oben genannten Anforderungen, insbesondere bei als DC- Bussystem ausgebildeten DC- Spannungssenken ist eine rückspeisefähige DC-DC-Wandlerschaltung bestehend aus zwei Wandlereinrichtungen besonders dann vorteilhaft, wenn die Spannungswerte von DC- Spannungsquelle und DC- Spannungssenke um circa eine Größenordnung oder mehr, also um circa einen Faktor 10 unterschiedlich sind.

Es kann ebenso vorteilhaft sein zwei derartige rückspeisfähige DC-DC-Wandlerschaltungen analog der oben beschriebenen Verbindung zweier DC-DC-Wandlerzellen zu eine DC-DC- Wandlerzellenanordnung zu verbinden.

Die erste Wandlereinrichtung kann hierbei gemäß dem bekannten Stand der Technik ausgebildet sein und aus einer Stufe oder einer Serienschaltung aus einer Mehrzahl von Stufen bestehen. Jede dieser Stufen besteht aus einer Halbbrückenschaltung, wobei der Mittelkontakt, der mindestens einen Stufe den einen der beiden jeweiligen Eingänge der DC-DC- Wandlerschaltung ausbildet. Es ist bevorzugt, wenn zwischen dem Eingang der rückspeisefähigen DC-DC-Wandlerschaltung und dem zugeordneten Mittelkontakt der ersten Wandlereinrichtung jeweils eine Spule vorgesehen ist. In vorteilhafter Weise können diese Spulen transformatorisch miteinander gekoppelt sein.

Die zweite Wandlerstufe ist ausgebildet als DC-DC- Wandlerzelle oder als DC-DC- Wandlerzellenanordnung wie oben beschrieben.

Die Gleichspannungskopplung der ersten mit der zweiten Wandlerschaltung ist als Verbindung der Ausgänge der ersten Wandlereinrichtung mit den Eingängen der zweiten Wandereinrichtung, wobei es bevorzugt sein kann wenn in mindestens einer dieser Verbindungen eine Spule vorgesehen ist.

Auf eine derartige Spule kann allerdings verzichtet werden, oder sie kann gegenüber üblichen Dimensionierungsregeln mit besonders geringer Induktivität vorgesehen werden, wenn die DC-DC- Wandlerschaltung in besonders vorteilhafter Weise betrieben wird.

Diese besonders vorteilhafte Betriebsweise zeichnet sich dadurch aus, dass im Aufwärtswandlerbetrieb, also bei einem geringeren Spannungswert am Eingang der DC-DC- Wandlerschaltung verglichen mit dem gewünschten Spannungswert am Ausgang, die erste Wandlereinrichtung eine kontinuierliche Erhöhung der Ausgangsspannung des Spannungswerts der DC- Spannungsquelle um maximal den Faktor Drei durchführt, während die zweite Wandlerschaltung die Ausgangspannung der ersten Wandlerschaltung ausschließlich um konstante, vorzugsweise ganzzahlige, Faktoren durchführt.

Bei dieser ausschließlich Spannungserhöhung um ganzzahlige Faktoren können die Leistungsschalter der DC-Wandlerzellen, die die zweite Wandlereinrichtung ausbilden derart geschaltet werden, dass in der Verbindung zwischen der ersten und der zweiten Wandlereinrichtung kein oder nur sehr geringe Energie gespeichert werden muss. Somit kann auf eine dort angeordnete Spule vollständig verzichtet werden oder dies zumindest gegenüber den bekannten Dimensionierungsregeln mit wesentlich geringer Induktivität vorgesehen sein.

Auch bei weiteren bevorzugten, nicht ganzzahligen aber konstanten, Faktoren der Spannungserhöhung in Kombination mit der einer geeigneten Anzahl von Leistungsschaltern je oberer und unterer Reihenschaltung ist ein derartiger Vorteil, nämlich die vollständig auf die Spule zu verzichten oder sie doch zumindest mit geringer Induktivität auszubilden, gegeben.

Die erfinderische Lösung wird an Hand der Ausführungsbeispiele gemäß den Fig. 1 bis 8 weiter erläutert.

Fig. 1 zeigt schematisch eine DC-DC- Wandlerzelle.

Fig. 2 und 3 zeigen jeweils eine DC-DC- Wandlerzelle mit verschiedenen Anschlussvarianten.

Fig. 4 zeigt eine Ausführung einer Schaltung einer DC-DC- Wandlerzelle.

Fig. 5 zeigt schematisch eine DC-DC- Wandlerzellenanordnung mit externer Beschaltung.

Fig. 6 zeigt eine Ausführung einer Schaltung einer DC-DC-Wandlerzellenanordnung.

Fig. 7 zeigt in einer Simulation die relative Welligkeit der Ausgangsspannung verschiedener DC-DC- Wandlerzellenanordnungen.

Fig. 8 zeigt eine rückspeisefähige DC-DC- Wandlerschaltung.

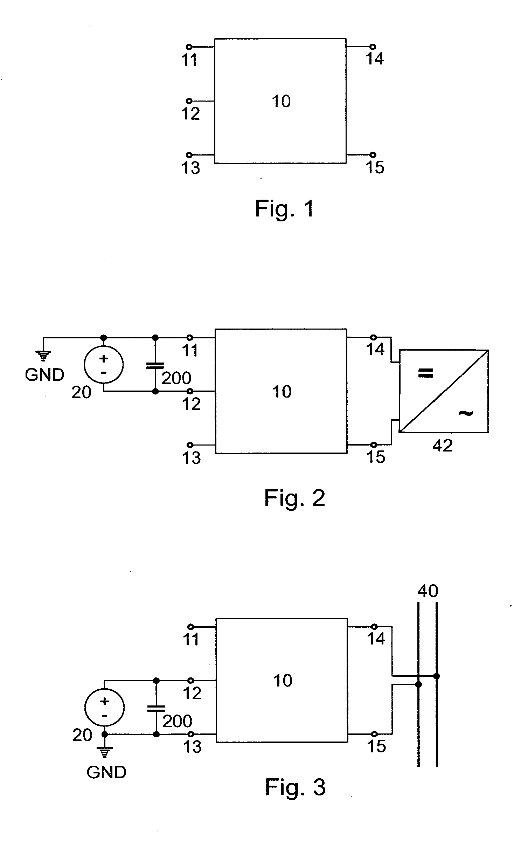

Fig. 1 zeigt schematisch eine DC-DC- Wandlerzelle 10 mit drei Eingangs- 11, 12, 13 und zwei Ausgangsanschlüssen 14. 15. Diese Wandlerzelle 10 bildet gewissermaßen das Basismodul oder die Basiskomponente aller weiteren folgenden Schaltungen.

Fig. 2 und 3 zeigen jeweils eine DC-DC- Wandlerzelle 10 mit verschiedenen Anschlussvarianten. Fig. 2 zeigt eine DC- Spannungsquelle 20 mit einem positiven und einem negativen Pol. Der positive Pol ist mit dem ersten Eingangsanschluss 11 der DC-DC- Wandlerzelle 10 verbunden, während der negative Pol mit dem zweiten Eingangsanschluss 12 der DC-DC- Wandlerzelle 10 verbunden ist. Weiterhin dargestellt ist die vorteilhafte Verbindung eines Eingangsanschlusses, hier des ersten Eingangsanschlusses 11, mit Grundpotential GND. Derartige Verbindungen mit Grundpotential GND sind häufig üblich bei Photovoltaikanlangen als DC-Spannungsquelle.

Weiterhin und unabhängig von der Verbindung zu Grundpotential GND sind die beiden Eingangsanschlüsse 11, 12 in bevorzugter Weise mit einem Eingangskondensator 200 verbunden. Dieser dient bei DC- Spannungsquellen 20 mit gegebener Welligkeit der Ausgangsspannung deren Glättung. Er kann allerdings auch als kurzzeitiger Energiespeicher dienen, falls die Ausgangsspannung der DC- Spannungsquelle 20 nicht kontinuierlich zur Verfügung steht.

Die Ausgänge 14, 15 der DC-DC- Wandlerzelle 10 sind hier beispielhaft mit einem Wechselrichter 42 als DC- Spannungssenke verbunden.

Fig. 3 zeigt eine weitere vorteilhafte äußere Beschaltung einer DC-DC-Wandlerzelle 10. Hierbei ist die DC- Spannungsquelle 20 mit ihrem positiven Pol mit dem zweiten Eingangsanschluss 12 der DC-DC- Wandlerzelle 10 verbunden, während der negative Pol mit dem dritten Eingangsanschluss 13 verbunden ist. Ebenso vorteilhaft kann es hier sein beispielhaft den negativen Pol der DC- Spannungsquelle 20, bzw. den dritten Eingangsanschluss 13 der DC-DC- Wandlerzelle mit Grundpotential GND zu verbinden.

Die Ausgänge der DC-DC- Wandlerzelle 10 sind mit einem DC- Bussystem 40 verbunden. Ein derartiges DC- Bussystem 40 verbindet beispielhaft innerhalb einer Photovoltaikanlage mehrere Teilanlagen miteinander und ggf. mit einer Wechselrichtereinrichtung. Ebenso können bei einer dezentralen Energieerzeugungseinrichtung an einem derartigen DC- Bussystem 40 mehrere DC-Spannungsquellen 20 unterschiedlicher Ausprägung miteinander verbunden sein. Beispielhaft können dies mehrere reine DC- Spannungsquellen wie Photovoltaikmodule oder Brennstoffzellen und auch DC- Speicher, wie Kondensatoreinrichtungen sein.

Die hier beschriebene DC-DC- Wandlerzelle 10 ist nicht nur in der Lage Energie von der DC- Spannungsquelle 20 zur DC- Spannungssenke 40, 42 zu transportieren sondern ist auch zum Energietransport in umgekehrter Richtung, beispielhaft zur Einspeisung in Kondensatoreinrichtungen als DC- Spannungsquelle geeignet. Hierbei wird üblicherweise der Spannungswert der DC- Spannungssenke 40, 42 verringert und in die DC- Spannungsquelle 20 eingespeist. Dies beschreibt die genannte Rückspeisfähigkeit der DC-DC- Wandlerzelle 10.

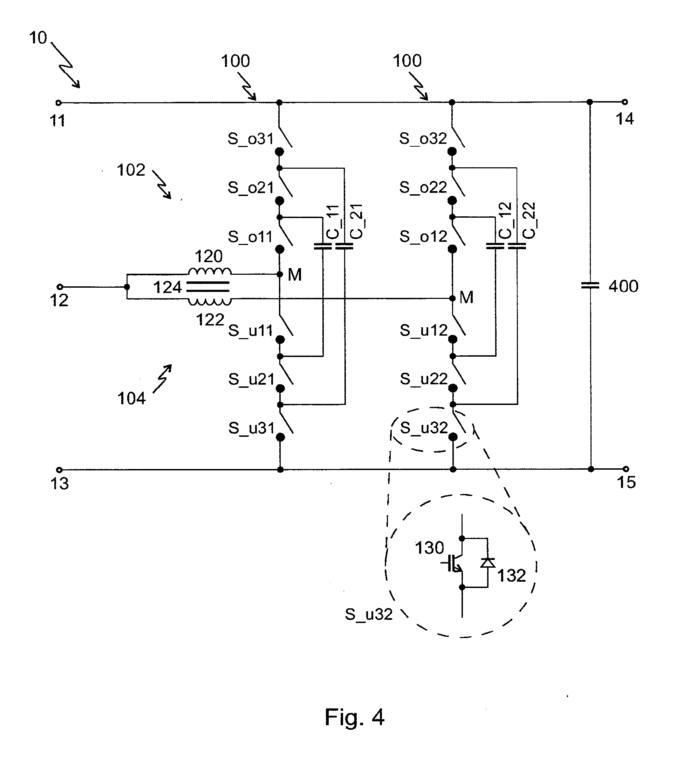

Fig. 4 zeigt eine Ausführung einer Schaltung einer DC-DC- Wandlerzelle 10 mit unter Fig. 3 beschriebener Funktionalität. Dargestellt sind die drei Eingangsanschlüsse 11, 12, 13, wie auch die beiden Ausgangsanschlüsse 14, 15. Der erste Eingangsanschluss 11 ist hierbei mit dem ersten Ausgangsanschluss 14 direkt verbunden, ebenso wie der dritte Eingangsanschluss 13 mit dem zweiten Ausgangsanschluss 15 direkt verbunden ist.

Die Wandlerfunktionalität wird ausgebildet durch hier zwei Wandlerstufen 100, wobei leistungsabhängig eine beliebige Anzahl möglich ist. Eine Wandlerstufe 100 besteht aus einer zu einem Mittelpunkt M symmetrischen Anordnung einer oberen 102 und einer unteren 104 Reihenschaltung jeweils einer Mehrzahl von Leistungsschaltern S_ox1, Sux2, S_ox2, S_ux2. Der Mittelpunkt M dieser symmetrischen Anordnung ist jeweils mit dem zweiten Eingangsanschluss 12 der DC- Wandlerzelle verbunden. In dieser Ausgestaltung ist zwischen dem zweiten Eingangsanschluss 12 und dem jeweiligen Mittelpunkt M jeweils eine Spule 120, 122 vorgesehen. Es kann hier zusätzlich vorteilhaft sein diese Spulen 120, 122 magnetisch mittels eines gemeinsamen Kerns 124 zu koppeln. Eine derartige Kopplung kann auch als transformatorische Kopplung bezeichnet werden.

Die obere 102 und untere 104 Reihenschaltung einer Wandlerstufe 100 besteht aus mindestens zwei, hier drei, Leistungsschaltern S_ox1, Sux2, S_ox2, S_ux2, die als Leistungstransistoren, beispielhaft als IGBTs 130 mit antiparallel geschalteter Freilaufdiode 132 oder als MOS-FETs mit intrinsischer Freilaufdiode ausgebildet sein. Jedem der Leistungsschalter S_ox1, Sux2, S_ox2, S_ux2 ist eine Ordnungszahl x zugeordnet, die mit eins beginnend von dem Mittelpunkt der Wandlerstufe aus gezählt wird. Die zweite Ziffer y bestimmt hier die jeweilige Wandlerstufe.

Weiterhin sind in der Wandlerstufe 100 abhängig von der Anzahl der Leistungsschalter Kondensatoren C_x1, C_x2 vorgesehen, wobei die Anzahl der Kondensatoren um eins kleiner ist als die Anzahl der Leistungsschalter pro Reihenschaltung 100. In der dargestellten Variante mit drei Leistungsschaltern je Reihenschaltung ergeben sich so zwei Kondensatoren. Bei einer, nicht dargestellten, gleichfalls vorteilhaften Ausgestaltung als 7- Level DC-DC- Wandlerzelle mit jeweils sechs Leistungsschaltern je Reihenschaltung wären fünf Kondensatoren vorzusehen.

Die Kondensatoren C_x1, C_x2 sind derart vorgesehen, dass der erste Kondensator C_1y mit seinem ersten Anschluss jeweils zwischen dem ersten S_o1y und zweiten Leistungsschalter S_o2y einer oberen Reihenschaltung 102 und mit seinem zweiten Anschluss jeweils zwischen dem ersten S_u1y und zweiten Leistungsschalter S_u2y einer unteren Reihenschaltung 104 angeschlossen ist. Bei einer nicht dargestellten Ausgestaltung mit vier Leistungsschaltern pro oberer und unterer Reihenschaltung würde ein dritter Kondensator in der oberen Reihenschaltung zwischen dem dritten und vierten Leistungsschalter und in der unteren Reihenschaltung ebenfalls zwischen dem dritten und vierten Leistungsschalter angeschlossen sein. Wesentlich ist also, dass zwischen jeweils zwei benachbarten Leistungsschaltern ein Kondensatoranschluss vorgesehen ist und dieser jeweilige Kondensator symmetrisch zwischen der oberen und der unteren Reihenschaltung angeschlossen ist.

Weiterhin kann es vorteilhaft sein die beiden Ausgangsanschlüsse 14, 15 der DC-DC- Wandlerzelle 10 mit einem weiteren Kondensator, dem Ausgangskondensator 400, zu verbinden.

Sollte keine Rückspeisefähigkeit der DC-DC- Wandlerzelle 10 gefordert sein, würden gemäß fachüblichem Handeln und abhängig von der externen Beschaltung einzelne Leistungsschalter durch Stromventile, also durch Dioden, ersetzt werden können.

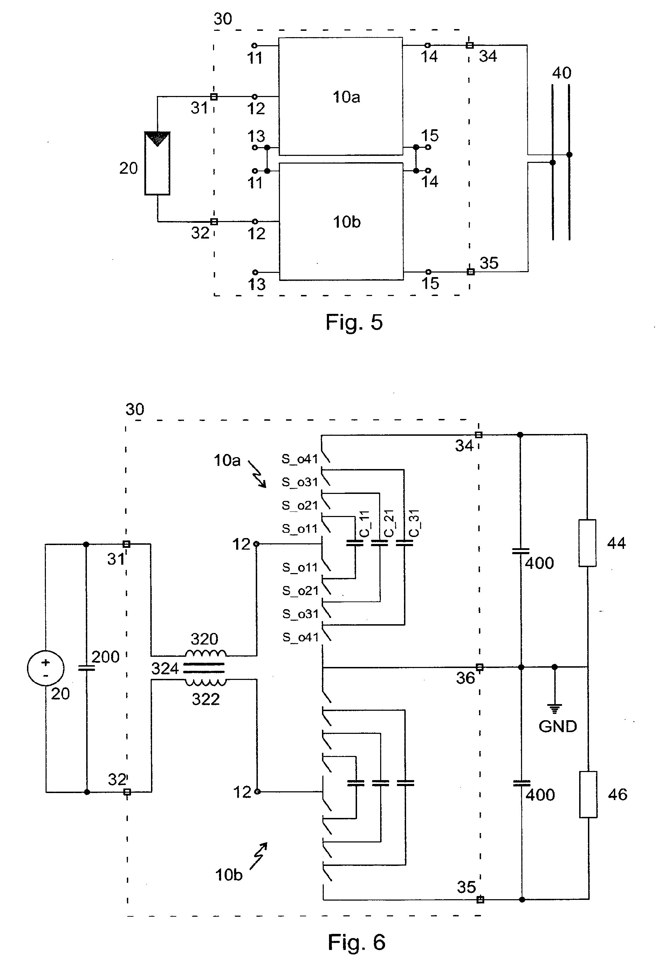

Fig. 5 zeigt schematisch eine DC-DC- Wandlerzellenanordnung 30 mit externer Beschaltung. Diese DC-DC- Wandlerzellenanordnung 30 besteht aus zwei miteinander verbunden DC-DC- Wandlerzellen 10 a/b. Hierzu ist der dritte Eingangsanschluss 13 der ersten DC-DC- Wandlerzelle 10a mit dem ersten Eingangsanschluss 11 der zweiten DC-DC- Wandlerzelle 10b verbunden. Ebenso sind, notwendigerweise durch die interne Verbindung innerhalb der jeweiligen DC-DC- Wandlerzelle 10 a/b, auch der zweite Ausgangsanschluss 15 der ersten DC-DC- Wandlerzelle 10a mit dem ersten Ausgangsanschluss 14 der zweiten DC-DC- Wandlerzelle 10b verbunden.

Der erste Eingangsanschluss 11 der ersten DC-DC- Wandlerzelle 10a, wie auch der dritte Eingangsanschluss 13 der zweiten DC-DC- Wandlerzelle 10b bilden ebenso wenig wie die oben beschriebenen verbunden Eingangsanschlüsse der jeweiligen Wandlerzellen keine externen Anschlüsse der DC-DC- Wandlerzellenanordnung 30 aus.

Vielmehr werden die beiden Eingänge 31, 32 der DC-DC-Wandlerzellenanordnung 30 aus den beiden zweiten Eingangsanschlüssen 12 der jeweiligen DC-DC- Wandlerzellen 10 a/b gebildet und sind hier mit einer als Photovoltaikmodul ausgebildeten DC- Spannungsquelle 20 verbunden. Die Ausgänge 34, 35 der DC-DC- Wandlerzellenanordnung 30 sind in dieser Ausgestaltung mit einem DC-Bussystem 40 verbunden, können allerdings ebenso direkt mit einer Wechselrichtereinrichtung verbunden werden.

Fig. 6 zeigt eine 5- Level- Ausführung einer Schaltung einer DC-DC-Wandlerzellenanordnung 30. Die jeweils die DC-DC- Wandlerzellenanordnung 30 bildenden DC-DC- Wandlerzellen 10 a/b weisen hier jeweils nur eine Stufe auf, die ihrerseits durch je eine obere und eine untere Reihenschaltung von 4 Leistungsschaltern S_o11 bis So41, S_u11 bis S_u41 gebildet wird die je Stufe mit drei Kondensatoren C_11 bis C_13 in oben beschriebener Weise verschaltet sind.

Nachfolgend den Eingängen 31, 32 der DC-DC- Wandlerzellenanordnung 30 ist hier jeweils eine Spule 320, 322 vorgesehen, wobei hier die beiden Spulen 320, 322 wiederum in nicht notwendiger, aber vorteilhafter Weise mittels eines gemeinsamen Kerns 324 magnetisch gekoppelt sind. An den Eingängen 31, 32 ist eine DC-Spannungsquelle 20 derart angeschlossen, dass deren positiver Pol mit demjenigen Eingang 31 der DC-DC- Wandlerzellenanordnung 30 verbunden ist, der intern dem zweiten Eingangsanschluss 12 der ersten DC-DC- Wandlerzelle 10a entspricht. Analog hierzu ist der negative Pol der DC- Spannungsquelle 20 mit dem Eingang 32 der DC-DC-Wandlerzellenanordnung verbunden, der intern dem zweiten Eingangsanschluss 12 der zweiten DC-DC- Wandlerzelle 10b entspricht. Weiterhin ist zwischen den Eingängen 31, 32 der DC-DC- Wandlerzellenanordnung 30 ein Eingangskondensator 200 vorgesehen mit einer Funktionalität wie oben zu Fig. 2 bereits beschrieben.

In dieser Ausgestaltung ist ein zusätzlicher, für bestimmte Anwendungen vorteilhafter weiterer Ausgang 36 der DC-DC- Wandlerzellenanordnung 30 dargestellt, der das Potential des zweiten Ausgangsanschlusses 15 der ersten DC-DC- Wandlerzelle 10a und damit auch dasjenige des ersten Ausgangsanschlusses 14 der zweiten DC-DC-Wandlerzelle 10b bereitstellt. Dieses Potential kann der Symmetrierung einer an den Ausgängen der DC-DC- Wandlerzellenanordnung angeordneten Last 44, 46 als DC-Spannungssenke dienen und kann zusätzlich auch auf Grundpotential GND liegen.

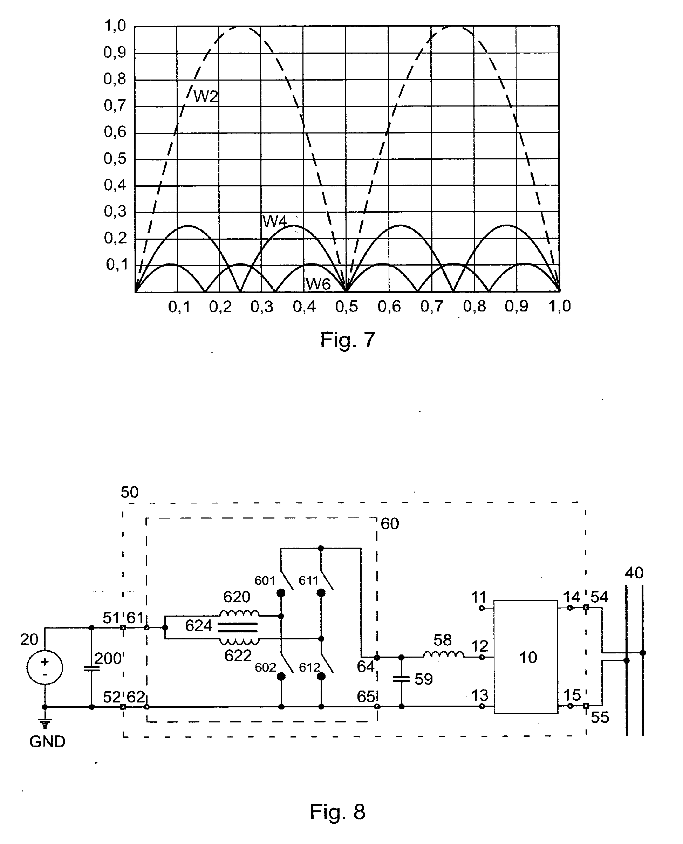

Fig. 7 zeigt in einer Simulation die relative Welligkeit der Ausgangsspannung verschiedener Ausgestaltungen von DC-DC- Wandlerzellenanordnungen im Vergleich zum Stand der Technik. Dargestellt ist hierbei die Welligkeit W2 einer bekannten Wandlerschaltung mit einer Halbbrückenschaltung als Wandlerstufe als relativer Welligkeitswert eins. Demgegenüber reduzierte eine 5- Level DC-DC-Wandlerzellenanordnung mit vier Leistungsschaltern je oberer und unterer Reihenschaltung den normierten Welligkeitswert W4 auf 0,25, während sechs Leistungsschalter pro oberer und unterer Reihenschaltung in einer 7-Level Wandlerzellenanordnung, den normierten Welligkeitswert W6 auf nur wenig über 0,1 reduzieren.

Hieraus wird ersichtlich dass die hier vorgestellte DC-DC-Wandlerzellenanordnung bzw. die DC-DC- Wandlerzellen selbst bei steigender Anzahl von Leistungsschaltern je oberer und unterer Reihenschaltung die Welligkeit der Ausgangsspannung signifikant reduziert. Gleichzeig können die ggf. an den Eingängen vorzusehenden Spulen im Vergleich zu bekannten Dimensionierungsregeln mit geringer Induktivität vorgesehen werden. Der schaltungstechnische Aufwand mit einer höheren Anzahl von Leistungsschaltern bewirkt eine bessere Signalqualität wie auch geringere Kosten bei der zusätzlichen Beschaltung.

Fig. 8 zeigt eine rückspeisefähige DC-DC- Wandlerschaltung 50 bestehend aus einer ersten 60 und einer zweiten Wandlereinrichtung 10, wobei die erste Wandlereinrichtung nach dem Stand der Technik ausgebildet ist einer geringfügigen Anhebung der Eingangsspannung der DC-DC- Wandlerschaltung 50 um maximal den Faktor drei, bevorzugt aber nur den Faktor zwei, dient. An diese erste Wandlereinrichtung 60 ist die zweite gleichspannungsgekoppelt angeschlossen, d.h. die erste Wandlereinrichtung erzeugte an ihren Ausgängen 64, 65 eine Ausgangsgleichspannung, die der zweiten Wandlereinrichtung 10 als Eingangsgleichspannung dient. Abhängig von der Betriebsweise der beiden Wandlereinrichtungen 50, 10 ist als Teil dieser Gleichspannungsverbindung keine oder mindesten in einer Leitung eine zusätzliche Spule 58 vorgesehen. Ebenso kann zwischen den beiden Polen dieser Gleichspannungsverbindung ein zusätzlicher Kondensator 59 vorgesehen sein.

Die zweite Wandlereinrichtung 10 wird gebildet durch eine oben beschriebene DC-DC- Wandlerzelle oder wie nicht dargestellt durch eine DC-DC- Wandlerzellenanordnung.

Am Eingang 51, 52, der rückspeisefähigen DC-DC- Wandlerschaltung ist in bekannter Weise eine DC- Spannungsquelle angeschlossen, wobei der positive Pol mit dem Mittelpunkt der jeweiligen Stufen der ersten Wandlereinrichtung über deren ersten Eingang 61 verbunden ist, während der negative Pol mit dem zweiten Eingang 62 der ersten Wandlereinrichtung 60 und über deren Ausgang 65 mit dem dritten Eingangsanschlusses 13 der DC-DC- Wandlerzelle 10 verbunden ist. Zudem kann einer der beiden Eingänge 51, 52 DC-DC- Wandlerschaltung 50, hier der zweite 52, derjenige des negativen Pols auf Grundpotential GND liegen. Unabhängig hiervon kann noch zwischen den beiden Polen der DC- Spannungsquelle 20 bzw. zwischen den Eingängen 51, 52 der DC-DC- Wandlerschaltung 50 ein Eingangskondensator 200 vorgesehen sein.

An den Ausgängen 54, 55 der rückspeisefähigen DC-DC- Wandlerzelle 50 ist wieder ohne Beschränkung der Allgemeinheit ein DC- Bussystem 40 oben beschriebener Ausgestaltung vorgesehen.

Beispielhafte Werte, die aus einer Anordnung mit einer Photovoltaikanlage stammen können wären eine Eingangsspannung an der DC-DC- Wandlerschaltung 50, also am Ausgang der DC- Spannungsquelle, von 125V bis 300V, eine gewünschte Ausgangsspannung an der DC-DC- Wandlerschaltung zum DC- Bussystem von 1500V und eine Wandelleistung von 125kW. Hierbei ist offensichtlich, dass bei einem Eingangsstrom von bis zu 1000A und in Kenntnis derzeit verfügbarer Leistungshalbleitermodule eine mehrstufige Ausgestaltung der ersten aber auch der zweite Wandlereinrichtung sinnvoll und notwendig ist.

In Vorteilhafter Weise wird die rückspeisefähige DC-DC- Wandlerschaltung derart betrieben, dass die erste Wandlereinrichtung die Eingangsspannung auf 300V anhebt und die zweite Wandlereinrichtung diesen Wert konstant verfünffacht. Hierbei ist es vorteilhaft, wenn diese zweite Wandlereinrichtung als eine 6-Level DC-DC- Wandlerzelle mit fünf Leistungsschaltern je oberer und unterer Reihenschaltung ausgebildet ist. Bei dieser Ausgestaltung und unter Anwendung dieses Verfahrens kann auf das Vorsehen jeglicher weiterer Bauelemente, insbesondere von Spulen, zwischen den Ausgängen der ersten Wandlereinrichtung und den Eingängen der zweiten Wandlereinrichtung verzichtete werden.

Falls die zweite Wandlerzelle als DC-DC- Wandlerzelle ausgebildet ist kann die gesamte DC-DC- Wandlerschaltung auch analog der oben beschriebenen Ausbildung der DC-DC- Wandlerzellenanordnung zu einer rückspeisefähigen DC-DC- Wandlerschaltung weitergebildet werden. Hierzu wir analog der obigen Beschreibung eine DC-DC-Wandlerschaltung an Ihrem negativen Potential um eine zweite erweitert.

## Patentansprüche

1. DC-DC- Wandlerzelle (10) mit drei Eingangs- (11, 12, 13) und zwei Ausgangsanschlüssen (14, 15) und mindestens einer Wandlerstufe (100), wobei der erste Eingangsanschluss (11) mit dem ersten Ausgangsanschluss (14) verbunden ist, der zweite Eingangsanschluss (12) mit dem Mittelpunkt (M) jeder der mindestens einen Wandlerstufe (100) verbunden ist und der dritte Eingangsanschluss (13) mit dem zweiten Ausgangsanschluss (15) verbunden ist und
jede Wandlerstufe (100) eine obere (102) und eine untere Reihenschaltung (104) mit jeweils mindestens drei Leistungsschaltern (S_ox1, S_ux1, S_ox2, S_ux2) aufweist, wobei die Ordnungszahl (x) des jeweiligen Leistungsschalters (S_ox1, S_ux1, S_ox2, S_ux2) vom Mittelpunkt (M) aus gezählt ist, der letzte dieser oberen Leistungsschalter (S_ox1, S_ox2) mit dem ersten Eingangsanschluss (11) und der letzte dieser unteren Leistungsschalter (S_ux1. S_ux2) mit dem dritten Eingangsanschluss (13) verbunden ist,
wobei in jeder der mindestens einen Wandlerstufe (100) Kondensatoren (C_x1, C_x2) derart vorgesehen sind, dass die Verbindungspunkte von je zwei oberen benachbarten Leistungsschaltern und je zwei unteren benachbarten Leistungsschaltern mit gleicher Ordnungszahl über einen jeweiligen Kondensator (C_x1, C_x2) verbunden sind und wobei an den ersten (11) und zweiten(12) oder an den zweiten (12) und dritten (13) Eingangsanschluss eine Gleichspannungsquelle (20) anschließbar ist.

2. DC-DC- Wandlerzelle (10) nach Anspruch 1, wobei
einer der beiden mit der Gleichspannungsquelle (20) verbindbaren Eingangsanschlüsse (11, 13) auf Grundpotential (GND) liegt.

3. DC-DC- Wandlerzelle (10) nach Anspruch 1, wobei
die beiden Ausgangsanschlüsse (14, 15) mittels eines Ausgangskondensators (400) miteinander verbunden sind.

4. DC-DC- Wandlerzelle (10) nach Anspruch 1, wobei
zwischen dem zweiten Eingangsanschluss (12) und dem Mittelpunkt (M) der mindestens einen Wandlerstufe (100) jeweils eine Spule (120, 122) geschaltet ist.

5. DC-DC- Wandlerzellenanordnung (30) mit zwei DC-DC- Wandlerzellen (10) gemäß einem der Ansprüche 1 bis 4, wobei der dritte Eingangsanschluss (13) sowie der zweite Ausgangsanschluss (15) der ersten DC-DC- Wandlerzelle (10a) dem ersten Eingangsanschluss (11) bzw. dem ersten Ausgangsanschuss (14) der zweiten DC-DC- Wandlerzelle (10b) entsprechen und wobei die zweiten Eingangsanschlüsse (12) der beiden DC-DC- (10 a/b) die Eingänge (31, 32) der Wandlerzellenanordnung ausbilden und erste Ausgangsanschluss (14) der ersten Wandlerzelle (10a) und der zweite Ausgangsanschluss (15) der zweiten Wandlerzelle (10b) die Ausgänge (34, 35) der DC-DC- Wandlerzellenanordnung (30) bilden.

6. Rückspeisefähige DC-DC- Wandlerschaltung (50) mit einer ersten Wandlereinrichtung (60), deren beiden Eingänge (61, 62) die Eingänge (51, 52) der DC-DC- Wandlerschaltung (50) ausbilden und mit einer DC- Spannungsquelle (20) verbindbar sind und mit einer gleichspannungsgekoppelten zweiten Wandlereinrichtung (10) deren Ausgänge (14, 15) die Ausgänge der DC-DC-Wandlerschaltung (50) ausbilden und mit einer DC- Spannungssenke (40, 42) verbindbar sind, wobei die zweite Wandlereinrichtung als DC-DC- Wandlerzelle (10) nach einem der Ansprüche 1 bis 4, oder als DC-DC- Wandlerzellenanordnung (30) nach Anspruch 5 mit zwei nach einem der Ansprüche 1 bis 4 ausgebildeten DC-DC-Wandlerzellen (10), ausgebildet ist.

7. Rückspeisefähige DC-DC- Wandlerschaltung (50) nach Anspruch 6, wobei die erste Wandlerschaltung (60) aus einer Stufe oder einer Serienschaltung aus einer Mehrzahl von Stufen besteht, wobei die mindestens eine Stufe über mindestens eine Spule (620, 622) mit der DC- Spannungsquelle (20) verbindbar ist.

8. Rückspeisefähige DC-DC- Wandlerschaltung (50) nach Anspruch 6, wobei mindestens ein Ausgang (64, 65) der ersten Wandlerschaltung (60) mittels einer zusätzlichen Spule (58) mit dem zugeordneten Eingang (12, 13) der zweiten Wandlerschaltung (10) verbunden ist.

9. Rückspeisefähige DC-DC- Wandlerschaltung (50) nach Anspruch 6, wobei beide Ausgänge (64, 65) der ersten Wandlerschaltung (60) direkt, ohne weiteres Bauelement, mit dem jeweils zugeordneten Eingang (12, 13) der zweiten Wandlerschaltung (10) verbunden sind.

10. Verfahren zum Betrieb einer rückspeisefähigen DC-DC- Wandlerschaltung (50) gemäß Anspruch 6, wobei im Aufwärtswandlerbetrieb die erste Wandlereinrichtung (60) eine kontinuierliche Erhöhung des Spannungswerts der DC- Spannungsquelle um maximal den Faktor Drei durchführt, während die zweite Wandlerschaltung (10) die Ausgangsspannung der ersten Wandlerschaltung (60) um einen weiteren konstanten Faktor durchführt.

11. Verfahren zum Betrieb einer rückspeisefähigen DC-DC- Wandlerschaltung (50) nach Anspruch 10, wobei der weitere Faktor gleich oder größer Drei, vorzugsweise gleich oder größer Fünf ist.

12. Verfahren zum Betrieb einer rückspeisefähigen DC-DC- Wandlerschaltung (50) nach Anspruch 10 oder 11, wobei der weitere Faktor ein ganzzahliger Faktor ist.

## Claims

1. DC/DC converter cell (10) having three input connections (11, 12, 13) and two output connections (14, 15) and having at least one converter stage (100), wherein the first input connection (11) is connected to the first output connection (14), the second input connection (12) is connected to the center point (M) of each of the at least one converter stages (100) and the third input connection (13) is connected to the second output connection (15) and
each converter stage (100) has an upper series circuit (102) and a lower series circuit (104) which each have at least three power switches (S_ox1, S_ux1, S_ox2, S_ux2), wherein the order number (x) of the respective power switch (S_ox1, S_ux1, S_ox2, S_ux2) is counted from the center point (M), the last of these upper power switches (S_ox1, S_ox2) is connected to the first input connection (11) and the last of these lower power switches (S_ux1, S_ux2) is connected to the third input connection (13),
wherein capacitors (C_x1, C_x2) are provided in each of the at least one converter stage (100) such that the connection points of in each case two upper adjacent power switches and in each case two lower adjacent power switches with the same order number are connected via a respective capacitor (C_x1, C_x2), and wherein a DC voltage source (20) can be connected to the first input connection (11) and the second input connection (12), or to the second input connection (12) and the third input connection (13).

2. DC/DC converter cell (10) according to Claim 1, wherein
one of the two input connections (11, 13) which can be connected to the DC voltage source (20) is at ground potential (GND).

3. DC/DC converter cell (10) according to Claim 1, wherein
the two output connections (14, 15) are connected to one another by means of an output capacitor (400).

4. DC/DC converter cell (10) according to Claim 1, wherein
a coil (120, 122) is in each case connected between the second input connection (12) and the center point (M) of the at least one converter stage (100).

5. DC/DC converter cell arrangement (30) having two DC/DC converter cells (10) according to one of Claims 1 to 4, wherein the third input connection (13) and the second output connection (15) of the first DC/DC converter cell (10a) respectively correspond to the first input connection (11) and to the first output connection (14) of the second DC/DC converter cell (10b), and wherein the second input connections (12) of the two DC/DC (10 a/b) form the inputs (31, 32) of the converter cell arrangement, and the first output connection (14) of the first converter cell (10a) and the second output connection (15) of the second converter cell (10b) form the outputs (34, 35) of the DC/DC converter cell arrangement (30).

6. DC/DC converter circuit (50) with a feedback capability and having a first converter device (60), whose two inputs (61, 62) form the inputs (51, 52) of the DC/DC converter circuit (50), and can be connected to a DC voltage source (20), and having a DC-voltage-coupled second converter device (10) whose outputs (14, 15) form the outputs of the DC/DC converter circuit (50) and can be connected to a DC voltage sink (40, 42), wherein the second converter device is in the form of a DC/DC converter cell (10) according to one of Claims 1 to 4, or of a DC/DC converter cell arrangement (30) according to Claim 5 having two DC/DC converter cells (10) formed according to one of Claims 1 to 4.

7. DC/DC converter circuit (50) with a feedback capability according to Claim 6, wherein the first converter circuit (60) consists of one stage or of a plurality of stages connected in series, wherein the at least one stage can be connected via at least one coil (620, 622) to the DC voltage source (20).

8. DC/DC converter circuit (50) with a feedback capability according to Claim 6, wherein at least one output (64, 65) of the first converter circuit (60) is connected by means of an additional coil (58) to the associated input (12, 13) of the second converter circuit (10).

9. DC/DC converter circuit (50) with a feedback capability according to Claim 6, wherein both outputs (64, 65) of the first converter circuit (60) are connected directly, without any further component, to the respectively associated input (12, 13) of the second converter circuit (10).

10. Method for operation of a DC/DC converter circuit (50) with a feedback capability according to Claim 6, wherein in the step-up converter mode, the first converter device (60) continuously increases the voltage value of the DC voltage source by a maximum of a factor of three, while the second converter circuit (10) carries out the output voltage of the first converter circuit (60) by a further constant factor.

11. Method for operation of a DC/DC converter circuit (50) with a feedback capability according to Claim 10, wherein the further factor is equal to or greater than three, preferably equal to or greater than five.

12. Method for operation of a DC/DC converter circuit (50) with a feedback capability according to Claim 10 or 11, wherein the further factor is an integer factor.

## Revendications

1. Cellule (10) de convertisseur continu-continu, présentant trois bornes d'entrées (11, 12, 13) et deux bornes de sortie (14, 15) ainsi qu'au moins un étage de convertisseur (100),
la première borne d'entrée (11) étant raccordée à la première borne de sortie (14), la deuxième borne d'entrée (12) à un point central (M) de chacun des différents étages de convertisseur (100) et la troisième borne d'entrée (13) à la deuxième borne de sortie (15) et
chaque étage de convertisseur (100) présentant un circuit série supérieur (102) et un circuit série inférieur (104) constitués tous deux d'au moins trois commutateurs de puissance (S_ox1, S_ux1, S_ox2, S_ux2), le numéro d'ordre (x) de chaque commutateur de puissance (S_ox1, S_ux1, S_ox2, S_ux2) étant compté à partir du point central (M) et le dernier de ces commutateurs de puissance supérieurs (S_ox1, S_ox2) étant raccordé à la première borne d'entrée (11) et le dernier de ces commutateurs de puissance inférieurs (S_ux1, S_ux2) à la troisième borne d'entrée (13),
des condensateurs (C_x1, C_x2) étant prévus dans chacun des différents étages de convertisseur (100) de telle sorte que les points de raccordement de deux commutateurs de puissance supérieurs voisins et de deux commutateurs de puissance inférieurs voisins présentant le même numéro d'ordre sont raccordés par un condensateur (C_x1, C_x2) respectif, une source de tension continue (20) pouvant être raccordée à la première borne d'entrée (11) et à la deuxième borne d'entrée (12) ou à la deuxième borne d'entrée (12) et à la troisième borne d'entrée (13).

2. Cellule (10) de convertisseur continu-continu selon la revendication 1, dans laquelle l'une des deux bornes d'entrée (11, 13) apte à être reliée à la source (20) de tension continue est placée au potentiel de masse (GND).

3. Cellule (10) de convertisseur continu-continu selon la revendication 1, dans laquelle les deux bornes de sortie (14, 15) sont raccordées l'une à l'autre au moyen d'un condensateur de sortie (400).

4. Cellule (10) de convertisseur continu-continu selon la revendication 1, dans laquelle une bobine (120, 122) est raccordée entre la deuxième borne d'entrée (12) et le point central (M) du ou des étages de convertisseur (100).

5. Ensemble (30) de cellule de conversion continu-continu doté de deux cellules (10) de convertisseur continu-continu selon l'une des revendications 1 à 4, dans lequel la troisième borne d'entrée (13) ainsi que la deuxième borne de sortie (15) de la première cellule (10a) de convertisseur continu-continu correspondent à la première borne d'entrée (11) ou à la première borne de sortie (14) de la deuxième cellule (10b) de convertisseur continu-continu, les deuxièmes bornes d'entrée (12) des deux convertisseurs continu-continu (10a/b) formant les entrées (31, 32) de l'ensemble de cellule de convertisseur et la première borne de sortie (14) de la première cellule de convertisseur (10a) et la deuxième borne de sortie (15) de la deuxième cellule de convertisseur (10b) forment les sorties (34, 35) de l'ensemble (30) de cellule de convertisseur continu-continu.

6. Circuit (50) de convertisseur continu-continu à rétroaction présentant un premier dispositif de convertisseur (60) dont les deux entrées (61, 62) forment les entrées (51, 52) du circuit (50) de convertisseur continu-continu et peuvent être raccordées à une source (20) de tension continue, et un deuxième dispositif de convertisseur (10) raccordé en tension continue, dont les sorties (14, 15) forment les sorties du circuit (50) de convertisseur continu-continu et peuvent être raccordées à un drain (40, 42) de tension continue, le deuxième dispositif de convertisseur étant configuré comme cellule (10) de convertisseur continu-continu selon l'une des revendications 1 à 4 ou comme ensemble (30) de cellule de convertisseur continu-continu selon la revendication 5, avec deux cellules (10) de convertisseur continu-continu configurées selon l'une des revendications 1 à 4.

7. Circuit (50) de convertisseur continu-continu à rétroaction selon la revendication 6, dans lequel le convertisseur (60) est constitué d'un étage ou d'un circuit série constitué de plusieurs étages, le ou les étages pouvant être raccordés à la source (20) de tension continue par l'intermédiaire d'au moins une bobine (620, 622).

8. Circuit (50) de convertisseur continu-continu à rétroaction selon la revendication 6, dans lequel au moins une sortie (64, 65) du premier circuit de convertisseur (60) est raccordée au moyen d'une bobine supplémentaire (58) à l'entrée associée (12, 13) du deuxième circuit de convertisseur (10).

9. Circuit (50) de convertisseur continu-continu à rétroaction selon la revendication 6, dans lequel les deux sorties (64, 65) du premier circuit de convertisseur (60) sont raccordées directement sans autre composant à l'entrée (12, 13) associée du deuxième circuit de convertisseur (10).

10. Procédé de conduite d'un circuit (50) de convertisseur continu-continu à rétroaction selon la revendication 6, dans lequel, en fonctionnement de convertisseur avant, le premier dispositif de convertisseur (60) exécute une augmentation continue de la valeur de la tension de la source de tension continue d'un facteur d'au plus trois tandis que le deuxième circuit de convertisseur (10) exécute la tension de sortie du premier circuit de convertisseur (60) d'un autre facteur constant.

11. Procédé de conduite d'un circuit (50) de convertisseur continu-continu à rétroaction selon la revendication 10, dans lequel le deuxième facteur est égal ou supérieur à trois et de préférence égal ou supérieur à cinq.

12. Procédé de conduite d'un circuit (50) de convertisseur continu-continu à rétroaction selon les revendications 10 ou 11, dans lequel l'autre facteur est un facteur entier.
